(19) **Europäisches Patentamt**

**European Patent Office**

**Office européen des brevets**

(11) Veröffentlichungsnummer : **0 172 207**
**B1**

(12) **EUROPÄISCHE PATENTSCHRIFT**

(45) Veröffentlichungstag der Patentschrift :
**11.01.89**

(21) Anmeldenummer : **85901007.6**

(22) Anmeldetag : **21.02.85**

(86) Internationale Anmeldenummer :
**PCT/EP 85/00064**

(87) Internationale Veröffentlichungsnummer :
**WO/8503700 (29.08.85 Gazette 85/19)**

(51) Int. Cl.⁴ : **C 04 B 28/04**, C 04 B 18/26,
C 04 B 22/06, C 04 B 22/14

(54) VERFAHREN ZUR HERSTELLUNG ZEMENTGEBUNDENER HOLZFASER-FORMKÖRPER.

(30) Priorität : **25.02.84 DE 3406895**

(43) Veröffentlichungstag der Anmeldung :
**26.02.86 Patentblatt 86/09**

(45) Bekanntmachung des Hinweises auf die Patenterteilung : **11.01.89 Patentblatt 89/02**

(84) Benannte Vertragsstaaten :
**AT BE DE FR GB SE**

(56) Entgegenhaltungen :
**EP--A-- 0 068 742**
**DE--C--   658 335**
**DE--C--   827 018**
**DE--C--   852 366**
**DE--C--   878 919**
**GB--A-- 1 121 572**

(73) Patentinhaber : **Simatupang, Maruli H., Dr.**
**Schützenstrasse 40**
**D-2057 Reinbek (DE)**

(72) Erfinder : **SIMATUPANG, Maruli H.**
**Schützenstrasse 40**
**D-2057 Reinbek (DE)**
Erfinder : **LANGE, Holger**
**Sedanstrasse 23**
**D-2000 Hamburg 13 (DE)**

(74) Vertreter : **Meyer, Ludgerus**
**Jungfernstieg 38**
**D-2000 Hamburg 36 (DE)**

**Beschreibung**

Die Erfindung betrifft ein Verfahren zur Herstellung zementgebundener Holzspan-Formkörper, bei welchem man eine Mischung mit einem Gehalt an Portlandzement, amorphem Siliciumdioxid, Holzspänen und Wasser sowie gegebenenfalls üblichen Zusatzstoffen erzeugt und die erhaltene feuchte Masse verformt und unter Druck und gegebenenfalls Erwärmung aushärtet.

Bei einem aus der DE-C-852 366 bekannten Verfahren dieser Art wird ein Raumteil Portlandzement mit 0,5 bis 1 Raumteilen eines Gemisches aus Kieselgur, feingemahlenen alumosilikathaltigen Stoffen, wie Trass oder Lava, sowie feinstgemahlenem Quarzsand und 1 bis 3 Raumteilen Sägemehl trocken vermischt, darauf je kg Portlandzement 0,5 bis 1 Liter Wasser bis zur Erzielung einer erdfeuchten, krümeligen bis plastischen Konsistenz zugefügt und die Masse verformt und ausgehärtet. Dieses Verfahren erfordert jedoch sehr hohe Bindemittelgehalte mit einem Gewichtsverhältnis Bindemittel : Holzspäne über 5 : 1 und und ist wegen der selbst bei so hergestellten Formsteinen nur relativ geringen Biegezugfestigkeiten zur Herstellung von Holzspanplatten ungeeignet.

Bei anderen bekannten Verfahren ähnlicher Art, bei denen das Bindemittel neben den üblichen Zusatzstoffen wie Ca(OH)$_2$, MgCl$_2 \cdot$ CaCl$_2$ und/oder Al$_2$(SO$_4$), nur aus Portlandzement besteht, können nur solche Holzspäne verwendet werden, die an das Wasser keine oder nur sehr geringe Mengen löslicher Inhaltsstoffe wie Zucker und/oder phenolische Verbindungen abgeben, da diese das hydraulische Abbinden des Bindemittels stark verzögern oder verhindern. Diese Verfahren sind daher auf die Verwendung von Nadelholzspänen beschränkt, so daß der Einsatz von heimischen Laubholzspänen nicht sinnvoll oder sogar unmöglich ist. Da viele Faserstoffe der stark alkalischen Umgebung nicht standhalten können, wird die Zerstörung der Formkörper beschleunigt.

Aufgabe der Erfindung ist es daher, ein unaufwendiges Verfahren der eingangs genannten Art zu schaffen, das mit wenigen, unaufwendigen Rohstoffen auch bei Verwendung von Laubholz- oder Lärchenholzspänen eine rasche und störungsfreie Fertigung auch plattenförmiger Formteile gestattet.

Zur Lösung dieser Aufgabe ist das Verfahren der eingangs genannten Art erfindungsgemäß mit den im kennzeichnenden Teil des Anspruchs 1 angegebenen Merkmalen ausgestattet.

Das erfindungsgemäße Verfahren gestattet die Verwendung heimischer Laubhölzer (wie z. B. Buchenholz), auch wenn diese größere Mengen löslicher Inhaltsstoffe, insbesondere Zucker und phenolische Verbindungen, an das in der Mischung enthaltene abgeben. Preßzeiten und -drucke sowie die gegebenenfalls vorzusehenden Erwärmungstemperaturen sind gegenüber den bekannten Verfahren nicht verlängert. Das Bindemittel der Formkörper ist gegenüber den bekannten Verfahren von wesentlich geringerer Alkalität, so daß insbesondere basenlösliche Inhaltsstoffe weniger stark gelöst und außerdem die chemische Zerstörung der Holzfasern gegenüber den bekannten Verfahren deutlich verlangsamt und vermindert wird. Eine spätere Carbonatisierung der Formkörper-Oberfläche durch Aufnahme von atmosphärischem CO$_2$ wird durch die Verminderung der Bindemittel-Alkalität ebenfalls zurückgedrängt, was die Versprödung des Faserstoffs verlangsamt. Das Verfahren ergibt Formkörper mit mechanischen Eigenschaften, die den bekannten nicht nachstehen. Die nach der Entnahme aus der Presse noch vorhandene Restfeuchte ist gegenüber bekannten Verfahren vermindert, so daß der Zeit- und Energie aufwand beim Trocknen außerhalb der Presse verringert wird. Das im Bindemittel enthaltene amorphe Siliciumdioxid fällt mit geeigneter Teilchengröße zum Beispiel in der Flugasche von Schmelzöfen an und kann preisgünstig bezogen werden.

Vorteilhafte weitere Ausgestaltungen des Verfahrens sind in den Unteransprüchen 2 bis 6 beschrieben.

Gegenstand der Erfindung ist weiterhin ein zementgebundener Holzspan-Formkörper mit den im Anspruch 8 genannten Merkmalen. Weiterbildungen dieses Formkörpers sind in den Unteransprüchen 9 und 10 definiert.

Im folgenden werden bevorzugte Ausführungsformen des Verfahrens anhand von Versuchen weiter erläutert.

Versuch 1 :

2 400 g Portlandzement PZ 45 F (70 Gew.% des Bindemittels) wurden trocken mit 1 030 g amorphen Siliciumdioxids (30 Gew.% des Bindemittels) gründlich vermischt. Das amorphe Siliciumdioxid wies eine spezifische Oberfläche von ca. 20 m$^2$/g auf und enthielt über 90 % Teilchen mit einer Teilchengröße unter 10 μm. 1 400 g Buchenspäne mit einer Feuchte von 5 % wurden mit 1 350 ml Wasser vermischt, in dem 34 g Al$_2$(SO$_4$)$_3$ gelöst waren. Die Buchenspäne waren bei einer Länge von über 20 mm zwischen 2 mm und 5 mm breit und 0,2 bis 0,3 mm dick. In einem Zwangsmischer wurden die Buchenspäne und das Wasser nach Zugabe von 41 g Ca(OH)$_2$ mit dem trocken vorgemischten Bindemittel aus Portlandzement und amorphem Siliciumdioxid durchgreifend vermischt. Das Gewichtsverhältnis des nicht von dem Faserstoff aufgenommenen Wassergehalts zum Bindemittelgehalt in der Mischung lag bei 0,3.

Aus der Mischung von Buchenholzspänen, Wasser, Zusatzstoffen und Bindemittel wurden zwei Plattenrohlinge mit den Abmessungen 44 cm × 44 cm geformt und anschließend in einer heizbaren Presse bei einem spezifischen Druck von ca. 1,5 N/mm$^2$ und einer Temperatur von 40 °C während 8 Stunden bis zur Formbeständigkeit ausgehärtet. Die Platten wurden dabei mit Hilfe von entsprechenden Distanzleisten auf eine Nenndicke von 12 mm eingestellt und wiesen eine Restfeuchte von ca. 20 % auf. Sie erreichten nach vollständiger Trocknung eine Rohdichte von 1,1 g/cm³ ; ihre Biegefestigkeit lag nach drei Tagen bei 2,5 N/mm² und nach 28 Tagen bei 7 N/mm².

Unter sonst gleichen Versuchsbedingungen, jedoch mit reinem Portlandzement als Bindemittel, wurden mit gleichen Buchenspänen Versuchsplatten hergestellt. Da nach 28 Tagen noch keine Formbeständigkeit durch entsprechende Bindemittelhärtung erreicht war, konnten keine vergleichbaren Festigkeitswerte bestimmt werden.

Während bei dieser ersten Ausführungsform das Verfahren Zement und amorphes Siliciumdioxid trocken vermischt und nachfolgend zu dem mit Wasser versetzten Faserstoff hinzugegeben werden, kann es besonders bei der Verwendung von Laubholz-Faserstoffen mit einem hohen Gehalt von basenlöslichen Inhaltsstoffen vorteilhaft sein, die Holzspäne bzw. Holzwolle zuerst mit einer Mischung des amorphen Siliciumdioxids mit einem Teil des Wassers und nachfolgend mit einer Mischung des Zements mit dem restlichen Wasser zu vereinigen. Dadurch werden die Faserstoffe mit einer chemisch nicht aggressiven Umhüllung aus Siliciumdioxid umgeben, die den chemischen Angriff des stark alkalischen Zementleims einerseits und die Herauslösung basenlöslicher Inhaltsstoffe andererseits stark zurückdrängt.

Versuch 2 :

In einer Kolloidmühle wurden 1 170 g Portlandzement PZ 35 F (70 Gew.% des Bindemittels) mit 410 ml Wasser vermahlen und dabei durchgreifend vermischt. In einem Zwangsmischer wurden 670 g getrocknete Lärchenholzspäne (Restfeuchte 5 %) mit einer Aufschlammung von 500 g amorphem Siliciumdioxid in 300 ml Wasser und nachfolgend mit dem Bindemittel-Wasser-Gemisch vermischt. Das Gewichtsverhältnis des nicht vom Faserstoff aufgenommenen Wassergehalts zum Bindemittelgehalt lag bei 0,33.

Die Mischung wurde zu einem Plattenrohling von 44 cm × 44 cm Ausdehnung geformt und nachfolgend in einer Presse bei 40 °C unter einem spezifischen Druck von ca. 1,5 N/mm² während 8 Stunden gepreßt. Die bis zur Formbeständigkeit ausgehärtete Platte wies eine Restfeuchte von ca. 22 % auf und erreichte bei einer Rohdichte von 1,1 g pro cm³ nach drei Tagen eine Biegefestigkeit von ca. 4 N/mm² und nach 28 Tagen eine Biegefestigkeit von ca. 8 N/mm².

Unter sonst gleichen Versuchsbedingungen hergestellte herkömmliche Lärchenholz-Spanplatten mit Portlandzement als alleinigem Bindemittel erreichten nach drei Tagen eine Biegefestigkeit von 0,4 N/mm² und nach 28 Tagen eine Biegefestigkeit von 1,2 N/mm².

Für diese zweite bevorzugte Ausführungsform des Verfahrens werden an die Bindemitteleigenschaften des Zementleims höhere Anforderungen gestellt als bei der ersten Ausführungsform. Daher wird der Zement vor der Vermischung mit dem amorphen Siliciumdioxid und dem Faserstoff in Gegenwart von Wasser in einer geeigneten hochtourigen Mühle vorzerkleinert und durchgreifend mit dem entsprechenden Teil des Wassers vermischt und aufgeschlämmt. Der dabei erzielte Aufschluß des Zementklinkers zu kleineren Teilchen führt gleichzeitig zu einer durchgreifenden Hydratation des Bindemittels.

Wenn man sich diesen Vorteil auch für die erste Ausführungsform des Verfahrens zu Nutze machen will, können der Zement und das amorphe Siliciumdioxid vor der Vermischung mit dem Faserstoff gemeinsam trocken in einer Kugelmühle zerkleinert und vermischt werden.

Die Verwendbarkeit heimischer Laubholzarten bei dem erfindungsggemäßen Verfahren zeigen die beiden folgenden Versuche :

Versuch 3 :

In einer Laborzementmühle zur Herstellung von Normmörtel nach DIN 1 164 wurden 1 206 g Portlandzement PZ 35 F mit 200 cm³ Leitungswasser versetzt und gaben nach dem Vermahlen eine krümelige Masse. In einem Zwangsmischer wurden 670 g getrockneter Birkenspäne (Zuckergehalt 0,5 %, Restfeuchte 4 %) mit 770 ml Leitungswasser homogen vermischt, nachfolgend 516 g amorphes Siliciumdioxid zugesetzt und erneut durchgreifend vermischt. Das Gewichtsverhältnis des nicht vom Faserstoff aufgenommenen Wassergehalts zum Bindemittelgehalt lag bei 0,35. Die Mischung wurde zu einem Plattenrohling von 44 cm × 44 cm Ausdehnung geformt und nachfolgend in einer beheizten Presse bei 40 °C unter einem spezifischen Druck von ca. 1,5 N/mm² während 8 Stunden gepreßt. Die bis zur Formbeständigkeit ausgehärtete Platte wies eine Restfeuchte von ca. 19 % auf und erreichte nach Trocknung eine Rohdichte von 1,1 g pro cm³ und eine Biegefestigkeit von 4,7 N/mm² nach drei Tagen und von 8,7 N/mm² nach 28 Tagen.

Unter sonst gleichen Versuchsbedingungen hergestellte herkömmliche Birkenholz-Spanplatten mit Portlandzement als alleinigem Bindemittel ließen sich nicht ohne Beschädigung aus der Presse nehmen und deswegen nicht zur Prüfung heranziehen.

Versuch 4 :

Mit einem Laborrührer wurden 1 206 g Portlandzement PZ 35 F mit 200 cm³ Leitungswasser zu einer krümeligen Masse vermischt. In einem Zwangsmischer wurden 670 g getrocknete Pappelspäne (Zuckergehalt 0,4 % und Restfeuchte 4 %) mit 770 cm³ Leitungswasser ebenfalls gründlich homogen vermischt. Nach Hinzufügung von 516 g amorphen Siliciumdioxids wurde noch einmal durchgreifend durchgemischt. Das Gewichtsverhältnis des nicht vom Faserstoff aufgenommenen Wassergehaltes zum Bindemittelgehalt lag bei 0,35. Die Mischung wurde zu einem Plattenrohling von 44 cm × 44 cm Ausdehnung geformt und nachfolgend in einer beheizten Presse bei 40 °C unter einem spezifischen Druck von 1,5 N/mm² während 8 Stunden gepreßt. Die bis zur Formbeständigkeit ausgehärtete Platte wies eine Restfeuchte von ca. 18 % auf und erreichte bei einer Rohdichte von 1,1 g pro cm³ eine Biegefestigkeit von ca. 4 N/mm² und ca. 9 N/mm² nach jeweils drei und 28 Tagen.

Unter sonst gleichen Versuchsbedingungen hergestellte herkömmliche Pappelholz-Spannplatten mit Portlandzement als alleinigem Bindemittel ergaben Biegefestigkeiten von ca. 1 N/mm² bzw. 3 N/mm² nach 3 bzw. 28 Tagen.

**Patentansprüche**

1. Verfahren zur Herstellung zementgebundener Holzspan-Formkörper, bei welchem man eine Mischung mit einem Gehalt an Portlandzement, amorphem Siliciumdioxid, Holzspänen und Wasser sowie gegebenenfalls üblichen Zusatzstoffen erzeugt und die erhaltene feuchte Masse verformt und unter Druck und gegebenenfalls Erwärmung aushärtet, dadurch gekennzeichnet, daß man

a) ein amorphes Siliciumdioxid mit einer spezifischen Oberfläche von 15 bis 25 m²/g und über 90 % Teilchen mit einer Teilchengröße unter 10 μm verwendet und

b) in der Mischung ein Gewichtsverhältnis Portlandzement : Siliciumdioxid von 70 : 30 bis 40 : 60,

c) ein Gewichtsverhältnis des Bindemittels aus Portlandzement und Siliciumdioxid zu den Holzspänen von 2,45 : 1 bis 2,8 : 1 und

d) ein Gewichtsverhältnis des nicht von den Holzspänen aufgenommenen Wassergehalts zum Bindemittelgehalt von 0,25 : 1 bis 0,35 : 1 einhält.

2. Verfahren nach Anspruch 1, dadurch gekennzeichnet, daß man ein amorphes Siliciumdioxid mit einer spezifischen Oberfläche von 18 bis 22 m²/g verwendet.

3. Verfahren nach Anspruch 1 oder 2, dadurch gekennzeichnet, daß man die Holzspäne zunächst mit Wasser und dem Siliciumdioxid vermischt und nachfolgend den Portlandzement einmischt.

4. Verfahren nach einem der Ansprüche 1 bis 3, dadurch gekennzeichnet, daß man den Portlandzement vor dem Einmischen in Gegenwart von Wasser in einer Mühle zu einer krümelingen Masse zerkleinert.

5. Verfahren nach einem der Ansprüche 1 bis 4, dadurch gekennzeichnet, daß man Lärchenholzspäne verwendet.

6. Verfahren nach einem der Ansprüche 1 bis 4, dadurch gekennzeichnet, daß man Laubholz- und/oder Buchenholzspäne verwendet.

7. Verfahren nach einem der Ansprüche 1 bis 6, dadurch gekennzeichnet, daß man in die Mischung zusätzlich noch 0,2-3 Gew.% Ca(OH)₂ und/oder Al₂(SO₄)₃ einbringt.

8. Zementgebundener Holzspan-Formkörper mit einem hydraulisch abgebundenen Bindemittel aus Portlandzement und amorphem Siliciumdioxid sowie gegebenenfalls üblichen Zusatzstoffen, dadurch gekennzeichnet, daß

a) das Bindemittel 40 bis 70 Gew.% Portlandzement und 60 bis 30 Gew.% amorphes Siliciumdioxid enthält,

b) mindestens 90 % der SiO₂-Teilchen eine Teilchengröße unter 10 μm aufweisen und

c) das Gewichtsverhältnis Bindemittel : Holzspäne 2,45 : 1 bis 2,8 : 1 beträgt.

9. Zementgebundener Holzspan-Formkörper nach Anspruch 8, dadurch gekennzeichnet, daß die Holzspäne im wesentlichen Laubholz- und/oder Lärchenholzspäne sind.

10. Zementgebundener Holzspan-Formkörper nach Anspruch 9, dadurch gekennzeichnet, daß man Buchenholzspäne verwendet.

**Claims**

1. A process for manufacturing moulded or pressed products of cement-bonded wood chips, in which a mixture is formed of Portland cement, amorphous silicon dioxide, wood chips and water, if desired together with conventional additives, to give a moist mass, which is deformed under pressure and, if desired, hardened by heating, characterised in that :

a) the amorphous silicon dioxide has a specific sudace area of 15 to 25 m²/g, more than 90 % of·the particles having a particle size of less that 10 μm ;

b) the ratio by weight of Portland cement to silicon dioxide is between 70 : 30 and 40 : 60 ;

c) the ratio by weight of the binder, consisting of Portland cement and silicon dioxide, to the wood chips is between 2.45 : 1 and 2.8 : 1, and :

d) the ratio by weight of free water, i. e. water which is not absorbed by the wood chips, to binder is between 0.25 : 1 and 0.35 : 1.

2. Process as claimed in Claim 1, characterised in that the amorphous silicon dioxide has a specific suface area of 16 to 22 m²/g.

3. Process as claimed in Claims 1 or 2, characterised in that the wood chips are first mixed with water and the silicon dioxide, after which this mixture is mixed with the Portland cement.

4. Process as claimed in one of the Claims 1 to 3, characterised in that before the Portland cement is added it is first size-reduced in a mill to form a crumbly mass.

5. Process as claimed in one of the Claims 1 to 4, characterised in that larch chips are used.

6. Process as claimed in one of the Claims 1 to 4, characterised in that chips of beech and/or deciduous trees are used.

7. Process as claimed in one of the Claims 1 to 6, characterised in that 0.2 to 3 % by weight of Ca(OH)₂ and/or Al₂(SO₄)₃ are added to the mixture.

8. Cement-bonded wood chip moulded or pressed product containing a hydraulically set binder of Portland cement and amorphous silicon dioxide as well as, if desired, conventional additives, characterised in that :

a) the binder contains 40 to 70 % by weight of Portland cement and 60 to 30 % by weight of amorphous silicon dioxide ;

b) at least 90 % of the $SiO_2$ has a particle size less than 10 μm ;

c) the ratio by weight of binder to wood chips is between 2.45 : 1 and 2.8 : 1.

9. Cement-bonded wood-chip moulded or pressed product as claimed in Claim 8, characterised in that the wood chips are predominantley larch and/or of deciduous trees.

10. Cement-bonded wood-chip moulded or pressed product as claimed in Claim 9, characterised in that beech-wood chips are used.

**Revendications**

1. Procédé de fabrication de corps moulés en copeaux de bois liés par du ciment, dans lequel on réalise un mélange contenant du ciment Portland, du dioxyde de silicium amorphe, des copeaux de bois et de l'eau ainsi qu'éventuellement des additifs usuels et on moule la masse humide obtenue et on la fait durcir sous pression et en chauffant le cas échéant, caractérisé en ce qu'on :

a) utilise un dioxyde de silicium amorphe d'une surface spécifique de 15 à 25 m²/g et plus de 90 % des particules ayant un diamètre inférieur à 10 μm et

b) maintient dans le mélange un rapport pondéral ciment Portland : dioxyde de silicium de 70 : 30 à 40 : 60,

c) un rapport pondéral du liant de ciment Portland et de dioxyde de silicium aux copeaux de bois de 2,45 : 1 à 2,8 : 1 et,

d) un rapport pondéral de la teneur en eau non absorbée par les copeaux de bois à la teneur en liant de 0,25 : 1 à 0,35 : 1.

2. Procédé selon la revendication 1, caractérisé en ce qu'on utilise un dioxyde de silicium amorphe d'une surface spécifique de 18 à 22 m²/g.

3. Procédé selon la revendication 1 ou 2, caractérisé en ce qu'on mélange d'abord les copeaux de bois avec l'eau et le dioxyde de silicium et qu'ensuite on incorpore et mélange le ciment Portland.

4. Procédé selon l'une des revendications 1 à 3, caractérisé en ce qu'on broye le ciment Portland avant l'incorporation, en présence d'eau dans un broyeur pour donner une masse friable.

5. Procédé selon l'une des revendications 1 à 4, caractérisé en ce qu'on utilise des copeaux de bois de mélèze.

6. Procédé selon l'une des revendications 1 à 4, caractérisé en ce qu'on utilise des copeaux de bois de feuillus et/ou de bois de hêtre.

7. Procédé selon l'une des revendications 1 à 6, caractérisé en ce qu'on ajoute encore en plus au mélange 0,2 à 3 % en poids de $Ca(OH)_2$ et/ou de $Al_2(SO_4)_3$.

8. Corps moulés en copeaux de bois liés au ciment par un liant hydraulique qui a pris, constitué de ciment Portland et de dioxyde de silicium amorphe ainsi que le cas échéant des additifs usuels caractérisés en ce que :

a) le liant contient 40 à 70 % en poids de ciment Portland et 60 à 30 % en poids de dioxyde de silicium amorphe,

b) au moins 90 % des particules de $SiO_2$ présentent une taille de particule inférieure à 10 μm et,

c) le rapport pondéral liant : copeaux de bois vaut de 2,45 : 1 à 2,8 : 1.

9. Corps moulés en copeaux de bois liés au ciment selon la revendication 8 caractérisés en ce que, les copeaux de bois sont pour l'essentiel des copeaux de bois de feuillus et/ou des copeaux de bois de mélèze.

10. Corps moulés en copeaux de bois liés par du ciment selon la revendication 9, caractérisés en ce qu'on utilise des copeaux de bois de hêtre.